# FASCICULE DE BREVET EUROPEEN

(11) **EP 3 956 068 B1**
(45) Date de publication et mention de la délivrance du brevet: **07.06.2023**
(21) Numéro de dépôt: 20727829.2
(22) Date de dépôt: 16.04.2020
(51) Int. Cl.: B05B 11/00, F16B 37/08

(54) **DISTRIBUTEUR DE PRODUIT FLUIDE**
FLÜSSIGPRODUKTSPENDER
FLUID PRODUCT DISPENSER

(30) Priorité: 17.04.2019 FR 1904116
(43) Date de publication de la demande: 23.02.2022
(73) Titulaire: SHISEIDO INTERNATIONAL FRANCE, 75008 Paris (FR)
(72) Inventeur: SIMON, Bruno, 45140 Boulay-Les-Barres (FR)
(74) Mandataire: CAPRI
(86) Numéro de dépôt international: PCT/FR2020/000132
(87) Numéro de publication internationale: WO 2020/212663

(56) Documents cités:
- WO-A1-2009/150351
- JP-A- H07 101 480
- JP-A- H09 276 758

## Description

La présente invention concerne un distributeur de produit fluide (liquide à pâteux) comprenant un réservoir de produit fluide pourvu d'un col fileté définissant intérieurement une ouverture communiquant avec l'intérieur du réservoir. Le distributeur comprend en outre une tête de distribution montée sur le col du réservoir, la tête comprenant un organe de distribution telle qu'une pompe ou une valve, un poussoir pour actionner l'organe de distribution et un organe de fixation en prise à la fois avec le col fileté du réservoir et l'organe de distribution. De tels distributeurs sont fréquemment utilisés dans les domaines de la parfumerie et de la cosmétique. Par extension, la présente invention s'applique également à un pot à col fileté muni d'un bouchon dévissable et revissable.

En général, l'organe de fixation comprend une jupe rigide formant intérieurement un ou plusieurs filets destinés à coopérer avec le col fileté du réservoir. Pour mettre en place la tête de distribution sur le réservoir, il suffit de visser l'organe de fixation à jupe fileté sur le col fileté du réservoir. Par la suite, l'organe de fixation peut être retiré du col par dévissage, puis à nouveau remis en place sur le col par vissage.

Dans l'art antérieur, on connait le document WO2009/150351 A1 qui décrit un distributeur comprenant un réservoir formant d'un col fileté et une tête de distribution montée sur le col du réservoir. La tête comprend une pompe ou une valve, un poussoir un organe de fixation en prise à la fois avec le col fileté et la pompe ou valve. L'organe de fixation comprend une jupe déformable et malléable destinée à venir en prise avec le col fileté en verre et une frette rigide engagée autour de la jupe pour pousser radialement la jupe contre le col fileté, de manière à déformer la jupe contre le filet du col pour créer une empreinte de filet dans la jupe.

La jupe de ce document WO2009/150351 A1 comprend des pattes qui forment des nervures internes allongées dans la direction axiale ou verticale. La frette rigide pousse les nervures internes contre les filets du col, qui viennent ainsi mordre dans ces nervures internes, de manière à former une empreinte négative des filets de col. La fixation sur le col est parfaitement assurée et il est en outre possible de dévisser cet organe de fixation du col pour avoir accès à l'intérieur du réservoir.

Cependant, on a remarqué qu'il est difficilement possible de revisser cet organe de fixation sur le col. Souvent, il se met de travers et n'assure plus l'étanchéité. De plus, ce système nécessite l'usage d'un col en verre avec souvent l'usage d'une géométrie de filet spécifique.

Dans l'art antérieur, on connaît aussi les documents JP H07 101480 A et JP H09 276758 A.

La présente invention a pour but de remédier aux inconvénients précités de l'art antérieur en définissant un distributeur de produit fluide dont l'organe de fixation est initialement monté sur un col fileté sans vissage, peut être dévissé, mais encore revissé de manière fonctionnelle et optimale, quelle que soit la matière du col.

Pour ce faire, la présente invention propose un distributeur de produit fluide comprenant :
- un réservoir de produit fluide pourvu d'un col fileté formant au moins un filet hélicoïdal externe et un bord supérieur annulaire,
- un élément de fermeture monté sur le col fileté du réservoir et comprenant un organe de fixation comprenant une jupe filetée formant au moins un filet hélicoïdal interne, l'élément de fermeture comprenant également une frette qui vient en prise serrante autour de la jupe filetée, la jupe comprenant plusieurs pattes formant chacune un segment du filet hélicoïdal interne, dans lequel :
- l'organe de fixation comprend des moyens d'indexation angulaire permettant de le positionner par rapport au filet hélicoïdal externe du col avec une orientation angulaire déterminée, et
- les segments de filet hélicoïdal interne de la jupe filetée viennent en prise filetée correspondante avec le filet hélicoïdal externe du col en position finale de montage.

Etant donné que le principe de fixation de l'invention est basé sur une imbrication intime et correspondante des filets respectifs du col et de la jupe lors du montage axial de l'organe de fixation sur le col fileté, il est nécessaire d'engager la jupe autour du col fileté avec une orientation adéquate qui permet d'atteindre la position finale de montage souhaité. Cette orientation peut par exemple être réalisée sur ligne de conditionnement par contrôle caméra et/ou guidage mécanique. Etant donné que l'organe de fixation est en général une pièce de révolution, il est avantageux de créer une rupture de révolution permettant de l'orienter angulairement. C'est précisément la fonction des moyens d'indexation angulaire, qui peuvent se présenter sous diverses formes, qui sont souvent visibles, comme un marquage localisé ou une caractéristique localisée, par exemple une patte plus courte, moins large ou plus large.

En d'autres termes, l'organe de fixation de l'invention présente les mêmes caractéristiques qu'un organe de fixation classique à visser/dévisser, avec toutefois cette caractéristique supplémentaire consistant en la segmentation de la jupe afin d'obtenir des pattes qui présentent un degré de liberté dans la direction radiale, permettant d'engager les pattes autour du col fileté dans un mouvement axial pur, sans effectuer de rotation. Le principe de montage est identique à celui du document WO2009/150351A1, mais le principe de fixation est différent, en ce qu'il n'engendre pas de déformation de la jupe, mais l'imbrication intime des filets correspondants du col et de la jupe, grâce aux moyens d'indexation angulaire permettant de les positionner avec une très grande précision par rapport au filet hélicoïdal externe du col avec une orientation angulaire déterminée. Cela permet notamment de monter l'organe de fixation de l'invention sur des cols en matière plastique, ce qui n'est pas possible avec l'organe de fixation du document WO2009/150351A1, qui nécessite un col en verre pour marquer l'empreinte dans la jupe par déplacement ou fluage de matière. Dans la présente invention, la jupe et le col peuvent être réalisés avec des matériaux de dureté identiques, et sans nécessité de géométrie de filet particulière.

Avantageusement, l'organe de fixation peut comprendre une couronne supérieure continue à partir de laquelle s'étendent les pattes. La couronne supérieure continue est rigide, alors que les pattes, du fait de leur indépendance mutuelle, peuvent se déformer et/ou se déplacer radialement vers l'extérieur ou l'intérieur. Les pattes peuvent être souples ou rigides.

Selon un mode de réalisation avantageux, les pattes sont reliées à la couronne supérieure continue par des charnières, permettant un pivotement radial des pattes autour d'axes tangentiels respectifs. Les pattes peuvent ainsi présenter une rigidité importante, leur déplacement radial étant entièrement assuré par les charnières. En variante, les pattes peuvent être souples.

Grâce aux charnières, l'amplitude de déplacement des pattes est important, par exemple de l'ordre de 90 degrés. Cela permet de mouler l'organe de fixation avec les pattes étendues radialement vers l'extérieur, dans une configuration globale plane en forme d'étoile ou de fleur. On peut ainsi augmenter la profondeur et la précision des segments de filet interne des pattes. De plus, on peut démouler les pattes sans débrochage en force, ce qui permet de ne pas les abimer et donc de conserver leur relief au niveau des segments de filet. L'engagement avec le col fileté est de ce fait amélioré, ce qui garantit un dévissage et surtout un revissage aisé. Ceci est d'autant plus vrai lorsque les pattes sont rigides et se comportent, une fois rabattues et serrées par la frette contre le col fileté, comme si la jupe était continue.

Selon un mode de réalisation pratique, les charnières peuvent définir deux positions extrêmes stables et une position intermédiaire instable, les deux positions extrêmes stables comprenant une position initiale de sortie de moule, dans laquelle les pattes s'étendent radialement vers l'extérieur sensiblement à angle droit par rapport à la couronne supérieure continue et une position finale de montage dans laquelle les pattes s'étendent axialement vers le bas sensiblement dans le prolongement de la couronne supérieure continue. Les pattes peuvent donc être moulées à plat et rabattues autour du col avant l'engagement de la frette autour des pattes pour finaliser le contact intime correspondant des filets du col et de la jupe. Les deux positions extrêmes stables assurent que les pattes sont toutes dans la même position et orientation une fois rabattue autour du col.

Selon un autre aspect, les charnières peuvent présenter une largeur qui est inférieure à celle des pattes. Ceci est d'autant plus valable que le nombre de pattes est réduit. Avec une jupe à quatre pattes par exemple, chaque patte s'étend sur un quart de cercle. On comprend alors que sa charnière ne peut pas s'étendre sur un quart de cercle, puisqu'elle doit définir un axe de pivotement sensiblement rectiligne. Par conséquent, la charnière ne s'étendra que sur un huitième de cercle par exemple.

Selon une autre caractéristique intéressante, les pattes peuvent être reliées ensemble par des voiles souples, qui sont avantageusement séparés de la couronne supérieure continue. Ces voiles, que l'on peut aussi qualifier de membranes, feuilles, films, sont par définition très minces et de ce fait très souples. Elles se déforment sous des contraintes très faibles, et notamment lorsque les pattes sont rabattues de leur position de sortie de moule vers leur position de montage axiale. Les voiles comblent partiellement ou totalement les espaces entres les pattes. De préférence, les voiles restent en retrait de la couronne supérieure pour ne pas gêner le fonctionnement des charnières. Les voiles peuvent se résumer à des segments de bande reliant les extrémités des pattes. La fonction principale de ces voiles est de restreindre les risques d'accrochage de l'organe de fixation entre les pattes. Sans ces voiles, un tube plongeur pourrait par exemple être coincé entre les pattes ou entre une patte et la couronne supérieure. Les pattes de deux ou plusieurs organes de fixation pourraient s'enchevêtrer. Avec ces voiles, les pattes sont jointives et forment ainsi un anneau complet en position de sortie de moule. Et une fois les pattes rabattues, les voiles se froissent et restent déformées sans gêner le dévissage et le revissage ultérieurs.

Selon une autre caractéristique, il est envisageable lors du montage d'abaisser radialement la frette rigide H sur les pattes jusqu'à une position intermédiaire située sous la charnière afin de rabattre les pattes à 45° environ dans une position plus favorable au transport et à la distribution dans un bol vibrant par exemple.

Selon une caractéristique avantageuse, les moyens d'indexation angulaire se présentent par exemple sous la forme d'une patte différente des autres. Il est également possible de jouer sur l'écrasement plus ou moins fort du joint de col disposé sur le bord supérieur du col pour atteindre la position finale de montage.

Selon une forme de réalisation, l'élément de fermeture comprend un organe de distribution, tel qu'une pompe ou une valve et un poussoir pour actionner l'organe de distribution. L'organe de fixation et la frette servent alors à monter la pompe ou la valve sur le col fileté du réservoir. En variante, l'élément de fermeture peut être un bouchon ou capot destiné à être associé à un pot.

L'invention définit également un procédé de montage d'un distributeur tel que défini ci-dessus, comprenant les étapes successives suivantes :
a) Déposer, avantageusement par gravité, l'organe de fixation sur le col,
b) Orienter angulairement l'organe de fixation (F ; F') sur le col (R1), afin d'assurer la prise filetée intime correspondante en position finale de montage, et
c) Engager la frette autour de la jupe pour amener les segments du filet hélicoïdal interne des pattes en prise filetée intime correspondante avec le filet hélicoïdal externe du col.

Et lorsqu'un joint de col est disposé sur le bord supérieur annulaire du col, l'étape préalable d'orientation angulaire tient compte de l'écrasement optimal du joint de col.

Avantageusement, avant ou pendant l'étape c), les pattes sont rabattues autour du col à partir d'une position initiale dans laquelle elles s'étendent à plat radialement vers l'extérieur.

Avantageusement, avant ou pendant l'étape c), les pattes sont amenées autour du col dans une position intermédiaire, faisant un angle de l'ordre de 0,5° à 45° par rapport à la position finale de montage, les pattes étant avantageusement contrainte dans cette position intermédiaire par la frette ou un élément de poussée axiale, qui peut faire partie intégrante d'une station de montage.

Optionnellement et si nécessaire, après l'étape c), un couple final de vissage est exercé sur l'organe de fixation pour garantir une imbrication optimale des segments du filet hélicoïdal interne des pattes avec le filet hélicoïdal externe du col. Il ne s'agit pas de visser l'organe de fixation sur le col, mais simplement d'assurer la qualité de l'imbrication, dans la plupart des cas, le couple final de vissage n'engendrera aucun mouvement de vissage.

L'invention définit également une installation ou station de montage pour mettre en oeuvre le procédé de montage défini ci-dessus, comprenant :
- des moyens de dépose pour déposer l'organe de fixation sur le col,
- des moyens d'orientation angulaire pour orienter angulairement l'organe de fixation sur le col, afin d'assurer la prise filetée intime correspondante en position finale de montage, et
- des moyens de poussée axiale agissant directement sur la frette (H), et optionnellement d'abord sur les pattes (F11 ; F11 ') de la jupe (F1), pour engager la frette autour de la jupe, afin d'amener les segments du filet hélicoïdal interne des pattes en prise filetée intime correspondante avec le filet hélicoïdal externe du col. Ces moyens de poussée peuvent comprendre un élément de poussée axiale qui agit uniquement sur la frette, ou en variante, d'abord sur les pattes et ensuite sur la frette.

Cette station de montage se distingue d'une station classique par la présence de moyens d'orientation angulaire entre l'organe de fixation et le col, et plus particulièrement entre le filetage de la jupe et le filetage du col.

L'esprit de la présente invention réside dans le fait de fendre une jupe filetée classique afin de lui conférer une déformabilité suffisante pour pouvoir l'engager axialement sans vissage sur un col fileté. L'orientation angulaire préalable de l'organe de fixation permet d'atteindre la position finale de montage de manière rapide et optimale. Le moulage à plat des pattes permet d'augmenter la qualité des segments de filet interne. Les voiles diminuent les problèmes de conditionnement et d'acheminement, notamment lors de l'opération d'assemblage du distributeur. Toutes ces caractéristiques contribuent à un montage de bonne qualité, tout en améliorant l'opération de dévissage et surtout l'opération de revissage par le consommateur.

L'invention sera maintenant plus amplement décrite en référence aux dessins joints, donnant à titre d'exemple non limitatif, un mode de réalisation de l'invention.

Sur les figures :
La figure 1 est une vue fortement agrandie de dessus en perspective d'un organe de fixation selon l'invention,
La figure 2 est une vue de dessous similaire à celle de la figure 1,
La figure 3est une vue légèrement de dessous de l'organe de fixation des figures 1 et 2 associé à un organe de distribution,
Les figures 4a et 4b sont des vues en coupe transversale verticale à travers un distributeur selon l'invention, respectivement avant et après montage,
La figure 5 est une vue schématique en coupe transversale verticale de l'organe de fixation illustrant les pattes dans différentes positions, et
La figure 6 est une vue partielle similaire à celle de la figure 1 pour une variante de réalisation.

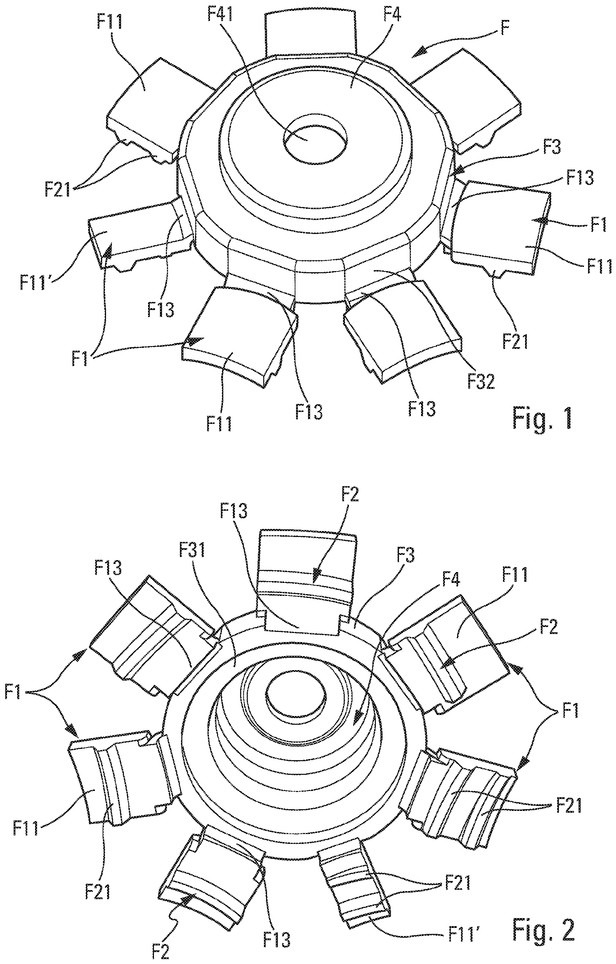

On se référera tout d'abord aux figures 1 et 2 pour décrire en détail la structure d'un organe de fixation F selon l'invention. Cet organe est représenté sur ces figures en position initiale de moulage, c'est-à-dire dans la configuration en sortie de moule. Le moule (non représenté) peut être un moule très simple à deux coquilles à déplacement axial. De ce fait, le démoulage de l'organe de fixation F se fait sans débrochage en force, ce qui permet de garantir l'intégrité et la précision de tous les reliefs de l'organe de fixation F.

L'organe de fixation F comprend un logement de réception F4, dans lequel un organe de distribution peut être reçu de manière fixe, notamment par encliquetage. Ce logement de réception F4 comprend une ouverture centrale F41 pour le passage de la tige d'actionnement de l'organe de distribution comme on le verra ci-après.

L'organe de fixation F comprend également une couronne F3 qui s'étend de manière continue autour du logement de réception F4. Cette couronne F3 définit intérieurement un plateau annulaire F31, dont la fonction sera donnée ci-après.

L'organe de fixation F comprend également plusieurs pattes F11 qui sont reliées à la couronne continue F3 par des charnières F13. Plus précisément, les charnières F13 relient les bords intérieurs des pattes F11 à la périphérie inférieure de la couronne supérieure continue F3. Sur les figures 1 et 2, l'organe de fixation F comprend sept pattes F11. Elles s'étendent dans la position initiale de moulage à plat radialement vers l'extérieur, de sorte que l'organe de fixation présente une configuration globale en forme d'étoile ou de fleur (marguerite). On peut remarquer que les pattes forment sur leur face interne des segments F21 de filet héliocoïdale interne. Certaines pattes forment un seul segment F21, alors que d'autres pattes peuvent former deux segments F21 ou davantage. Les segments F21 sont conçus pour former ensemble un ou plusieurs filets hélicoïdaux continus F2, une fois les pattes F11 rabattues vers le bas dans une orientation axiale pour former toutes ensemble une jupe fendue F1. On peut ainsi dire que la jupe fendue F1 comprend intérieurement un ou plusieurs filets hélicoïdaux continus F2 formés par l'ensemble des segments F21 des pattes F11.

On peut également remarquer sur les figures 1 et 2 que les charnières F13 sont moins larges que les pattes F11, afin de faciliter leur pivotement vers le bas. En effet, les charnières F13 ne peuvent s'étendre que sur une portion réduite de la périphérie annulaire de la couronne F3. Sur la figure 1, on peut aisément remarquer que la paroi externe de couronne F3 est formée avec des facettes planes F32 au niveau desquelles les charnières F13 sont disposées. Ainsi, chaque charnière F13 définit un axe horizontal qui s'étend de manière tangentielle à la couronne F3. Les pattes F11 peuvent ainsi pivoter vers le bas à partir de leur position initiale de moulage, dans laquelle elles s'étendent à plat radialement vers l'extérieur.

On peut aussi noter que les pattes F11 ne sont pas planes, mais présentent une courbure qui leur permet, une fois rabattues vers le bas, de former ensemble la jupe F1, qui est sensiblement cylindrique à la fois à l'extérieur et à l'intérieur. Cela signifie que les segments F21 s'étendent le long d'une paroi courbe, et non pas plane.

Les pattes F11 peuvent être toutes identiques, mais de préférence une patte F11' est différente des autres, de manière à rompre la symétrie de révolution. On peut voir que cette patte F11' est moins large que les autres. Sa charnière F13 peut être identique aux autres, ainsi que sa longueur. Cette patte F11' de largeur réduite forme ainsi des moyens d'indexation angulaire, permettant d'orienter l'organe de fixation F avec une orientation angulaire déterminée. Cette patte F11 ' constitue un mode de réalisation non limitatif pour ces moyens d'indexation angulaires. En effet, n'importe quelle caractéristique localisée peut servir de repère pour une orientation angulaire. Cette caractéristique peut être placée au niveau des pattes F11, ou autrement au niveau de la couronne F3 ou du logement de réception F4. Ce repère d'indexation angulaire peut être disposé sur la face supérieure ou sur la face inférieure de l'organe de fixation F.

Les charnières F13 permettent un pivotement des pattes F11 vers le bas à partir de la position initiale de moulage sur un angle de l'ordre de 90°. La position initiale de moulage est la position privilégiée, étant donné qu'elle correspond à la position de repos. Les pattes F11 peuvent donc être rabattues vers le bas par pivotement en exerçant une contrainte de déformation sur les charnières F13. De préférence, les pattes F11 ne subissent pas de déformation lors de ce pivotement. La position finale de montage, dans laquelle les pattes F11 sont rabattues axialement dans le prolongement de la paroi externe de la couronne F3, peut être une position instable résultant de la déformation de la charnière F13.

En variante, les charnières F13 peuvent être d'un type particulier, présentant deux positions extrêmes stables, à savoir la position initiale de moulage et la position finale de montage, et une position intermédiaire instable. En d'autres termes, les pattes F11 restent dans ces deux positions extrêmes horizontale et verticale sans exercer de contrainte sur elles. En revanche, toutes les positions intermédiaires sont instables et renvoient les pattes automatiquement soit dans la position horizontale de moulage, soit dans la position verticale de montage.

Les charnières F13 peuvent également présenter une déformabilité axiale qui permet de déplacer légèrement les pattes F11 dans la direction axiale afin qu'elles parviennent dans leur position finale de montage.

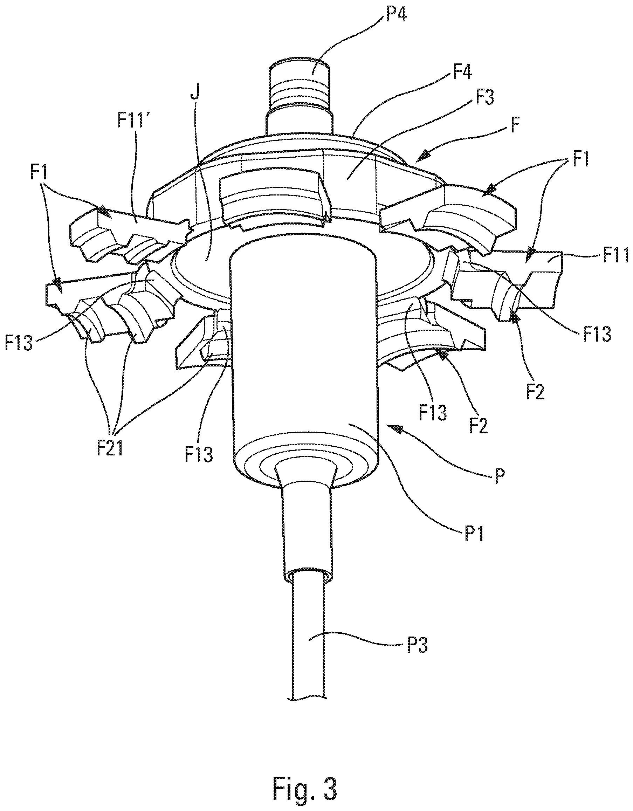

Sur la figure 3, on voit l'organe de fixation F des figures 1 et 2 associé à un organe de distribution P, qui peut être une pompe ou une valve. Cet organe de distribution P comprend un corps P1 qui est engagé dans l'organe de fixation F, et plus particulièrement dans son logement de réception F4. Le corps P1 comprend un tube plongeur P3. L'organe de distribution P comprend également une tige d'actionnement P4 qui est déplaçable axialement en va-et-vient à l'intérieur du corps P1. La tige d'actionnement P4 passe à travers l'ouverture centrale F41 du logement de réception F4. Il s'agit là de caractéristiques tout à fait classiques et communes pour une pompe ou une valve. L'organe de distribution P ne sera pas décrit plus en détail, car il ne constitue pas un élément critique pour la présente invention. On peut également remarquer sur la figure 3 qu'un joint de col J est disposé autour du corps P1 de l'organe de distribution P en appui sur le plateau F31 de l'organe de fixation F.

Cet ensemble, constitué de l'organe de fixation F, de l'organe de distribution P et éventuellement du joint de col J, est prêt à être monté sur un col fileté d'un réservoir de produit fluide.

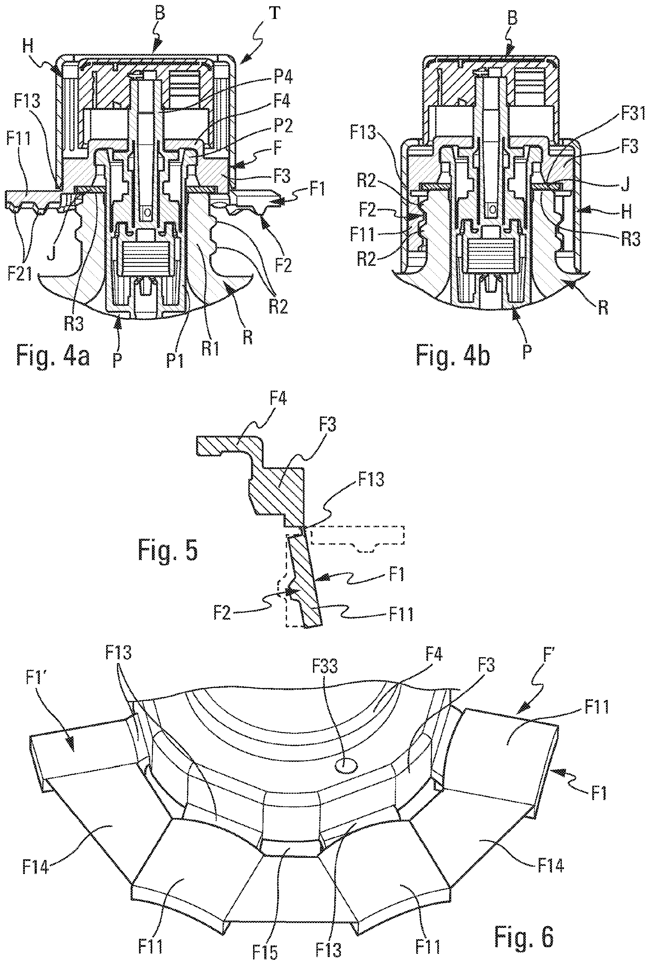

On se référera maintenant aux figures 4a et 4b pour montrer de quelle manière l'organe de fixation F de l'invention coopère avec un col fileté de réservoir. Sur ces figures, on voit uniquement la partie supérieure d'un réservoir de produit fluide R comprenant un col fileté R1 définissant un ou plusieurs filets hélicoïdaux externes R2, ainsi qu'un bord annulaire supérieur R3. Il s'agit là d'une configuration tout à fait classique pour un réservoir de produit fluide à col fileté dans les domaines de la parfumerie ou de la cosmétique. Le réservoir R peut être réalisé dans n'importe quel matériau approprié, comme par exemple le verre, une matière plastique, du métal, de céramique, etc. Sur ces figures, on peut également remarquer que l'organe de distribution P comprend une collerette supérieure saillante P2 qui est en prise, notamment par encliquetage, à l'intérieur du logement de réception F4. On peut également noter que la tige d'actionnement P4 est coiffée d'un bouton poussoir B, qui définit un orifice de distribution. L'organe de fixation F a été complété par une frette H qui est engagée autour de la couronne F3. Les pattes F11 s'étendent à plat radialement vers l'extérieur et le bord inférieur de la frette H vient en contact des charnières F13. La frette H peut être maintenue par frottement autour de la couronne F3. Le joint de col J est disposé sur le bord annulaire supérieur R3 du col R1. Dans cette configuration représentée sur la figure 4a, les pattes F11 s'étendent autour du bord supérieure R3 du col R1. Le filet externe R2 du col R1 est complètement dégagé. Le joint de col J n'est pas encore comprimé.

A partir de cette position initiale de montage, les pattes F11 sont rabattues vers le bas, soit à l'aide d'un élément de poussée externe, soit à l'aide de la frette H. D'une manière ou d'une autre, la frette H vient s'engager autour des pattes F11 pour amener leur segment respectif F21 de filet interne en contact correspondant et intime avec le filet externe R2 du col R1. La position finale de montage est représentée sur la figure 4b. La frette H s'étend autour des pattes F11 et son bord inférieur peut même venir en contact du réservoir R. Le joint de col J est comprimé entre le bord supérieur R3 et le plateau F31. Les pattes F11 ainsi rabattues forment toutes ensemble une jupe F1, qui n'est pas continue, mais au contraire fendue. Les segments F21 de filet forment tous ensemble un filet hélicoïdal interne F2 qui est en prise filetée intime et correspondante avec le filet externe R2 du col R1. En position finale de montage représentée sur la figure 4b, les pattes F11 peuvent venir en contact jointif ou au contraire rester séparées par une fente axiale. Le joint de col J est comprimé de manière optimale pour réaliser une étanchéité.

L'imbrication correspondante et optimale des deux filets F2 et R2 peut être obtenue en jouant sur la compression du joint de col J et/ou sur l'élasticité axiale des charnières F13 qui permet(tent) un déplacement axial relatif entre la jupe F1 et le col R1. En variante préférentielle, cette correspondance optimale des filets est obtenue en orientant préalablement l'organe de fixation F par rapport au col R1. Cette orientation angulaire peut se faire au moyen de la patte F11' ou de tout autre moyen d'indexation angulaire prévu au niveau de l'organe de fixation F. En pratique, on détermine ou on calcule l'orientation angulaire optimale de l'organe de fixation F par rapport au col R2, afin que leurs filets respectifs F2 et R2 s'imbriquent de manière optimale, avec un écrasement du joint de col J également optimal. Bien entendu, la compression du joint de col J et/ou sur l'élasticité axiale des charnières F13 peuvent aussi participer à la correspondance optimale des filets.

La figure 5 est une vue très schématique visant à montrer les positions que peuvent prendre les pattes F11. On a déjà vu en référence aux figures 1 à 3 que les pattes s'étendent initialement à plat radialement vers l'extérieur en sortie de moule. A partir de cette position initiale, les pattes sont rabattues et peuvent adopter une position de pré-montage représentée en trait plein sur la figure 5. Cette position intermédiaire peut être obtenue par une descente partielle de la frette H légèrement au-delà des charnières F13. Les pattes F11 peuvent alors s'étendre avec un angle de l'ordre de 0,5° à 45° par rapport à la verticale, correspondant à la position finale de montage. Cette orientation est plus favorable au transport et à la distribution dans un bol vibrant par exemple. En variante, cette position intermédiaire peut être une position stable des charnières F13.

L'organe de fixation F peut alors être monté sur le col fileté et les pattes F11 sont ensuite poussées radialement vers l'intérieur par la frette H pour prendre leur position finale de montage dans laquelle elles s'étendent verticalement dans le prolongement de la couronne F3.

Selon une autre variante de montage, la position intermédiaire (0,5° à 45° par rapport à la verticale) peut être atteinte en cours de montage, en utilisant un élément de poussée axial qui fait partie intégrante d'une station de montage. Cet élément de poussée axial, au cours d'un seul et même déplacement axial vers le bas, peut d'abord agir directement sur les pattes F11 pour les amener dans la position intermédiaire, puis ensuite agir sur la frette H pour amener les pattes en position finale de montage. La seule action de la frette H sur les pattes est une option préférée, mais dans certains cas, la variante de montage combinant l'élément de poussée axial et la frette pourra être mise en oeuvre.

La figure 6 montre une variante de réalisation pour l'organe de fixation. Dans cet organe de fixation F1', le logement de réception F4 et la couronne supérieure continue F3, ainsi que les pattes F11, peuvent être identiques ou similaires au premier mode de réalisation. Cependant, les moyens d'indexation angulaire se présentent ici sous la forme d'un trou F33 au niveau de la couronne F3. Les pattes F11 peuvent ainsi être toutes identiques. Les charnières F13 peuvent également être identiques à celles du premier mode de réalisation. La différence essentielle de ce mode de réalisation réside dans le fait que les pattes F11 sont reliées par des voiles F14. Ces voiles sont très minces et relient les bords adjacents des pattes F11. Les voiles F14 peuvent présenter une forme de trapèze, étant donné que les pattes F11 sont sensiblement rectangulaires et s'étendent radialement. Les voiles F14 s'étendent avantageusement jusqu'au niveau des bords externes des pattes F11, de manière à créer un pourtour continu sans décrochement. Les voiles F14 peuvent s'étendre jusqu'au niveau de la couronne F13, mais de préférence, ils s'arrêtent avant, de manière à créer une petite fenêtre allongée F15 bordée par deux charnières F13. Ces fenêtres F15 permettent de désolidariser les voiles F14 de la couronne F3, de manière à ne pas créer de gêne pour le fonctionnement des charnières F13. Les voiles F14 s'étendent vers l'intérieur jusqu'au niveau des bords intérieurs des pattes F11. En variante non représentée, les voiles F14 peuvent se limiter à une fine bande ou lame qui relie les bords externes des pattes F11. Ainsi, la fenêtre F15 serait bien plus grande. La fonction principale de ces voiles F14 est de combler les espaces entre les pattes F11 de manière à constituer une collerette annulaire continue, qui minimise les risques d'accrochage, notamment des organes de fixation entre eux ou d'un organe de fixation avec un tube plongeur. Les voiles F14 permettent également de créer un lien entre les pattes F11, de sorte qu'elles se comportent toutes d'une manière identique. En effet, grâce aux pattes F14, les pattes F11 sont soit toutes en position initiale de moulage, soit toutes en position finale de montage. Les voiles F14 sont suffisamment minces et souples pour ne pas gêner le rabattement des pattes F11 vers le bas. Elles vont se déformer et /ou se froisser sans contrainte excessive. Les voiles F14 sont de préférence formés au niveau de la paroi externe des pattes F11 de manière à ne pas gêner l'imbrication des filetages F2 et R2.

Grâce à l'organe de fixation de l'invention, on peut monter un organe de distribution P sur un col fileté R1 d'un réservoir F au cours d'un déplacement qui ne comprend pas de composante rotative. Les pattes F11 de la jupe F1 sont simplement rabattues autour du col fileté R1 sans mouvement de vissage. La frette H permet de maintenir les pattes F11 dans la configuration rabattue de manière à former une jupe cylindrique F1 avec un filet interne F2. La frette H contribue également à l'imbrication intime et correspondante des filets respectifs F2 et R2. Une fois cette opération de montage terminée, l'utilisateur peut se servir du distributeur jusqu'au vidage de son réservoir. L'utilisateur peut ensuite dévisser l'organe de fixation de manière tout à fait classique sans aucune difficulté, étant donné que le filet interne F2 est de très bonne qualité, puisque les pattes F11 ont été moulés à plat sans débrochage en force. Le revissage de l'organe de fixation sera également très facile, car le filetage F2 est saillant et précis.

Selon un autre mode de réalisation non représenté, le réservoir peut être un pot définissant un col fileté de diamètre accru, sur lequel est monté un bouchon ou capot fileté constitué par intégrant un organe de fixation et une frette de l'invention. Dans ce cas, l'organe de fixation n'a pas de logement de réception et la frette peut se présenter sous la forme d'un couvercle qui recouvre entièrement l'organe de fixation.

Qu'il s'agisse d'un flacon à pompe, d'un dispositif de prélèvement de type applicateur, ou d'un pot à bouchon, l'organe de fixation fait partie intégrante d'un élément de fermeture qui obture le réservoir à col fileté. L'organe de fixation est initialement monté sur le col fileté sans composante rotative, mais peut par la suite être dévissé, puis revissé. Les opérations de dévissage/revissage peuvent avoir pour but de pouvoir remplir à nouveau le réservoir de produit fluide dans un esprit de durabilité ou encore d'accéder au produit fluide du réservoir en enlevant un bouchon ou un applicateur. Le retrait du bouchon peut également donner accès à un applicateur solidaire du réservoir.

L'invention a été décrite avec un mode de réalisation dans lequel l'organe de fixation F comprend sept pattes F1. Sans sortir du cadre de l'invention, on peut également imaginer un organe de fixation de l'invention ne comportant que trois pattes, voire même deux pattes, ou au contraire plus de sept pattes. Bien que le moulage à plat des pattes F11 est préféré, il est également possible d'envisager un organe de fixation dont les pattes F11 seraient moulées dans une disposition faisant un angle de 5° à 45° par rapport à la position finale de montage. La frette H a été ici représentée comme formant un élément extérieur visible, mais elle peut également être formée par un élément interne du distributeur. Le réservoir R des figures est un flacon avec un col fileté de diamètre réduit.

Optionnellement et si nécessaire, après avoir atteint la position finale de montage est représentée sur la figure 4b, un couple final de vissage peut être exercé sur l'organe de fixation F pour garantir une imbrication optimale des segments du filet hélicoïdal interne des pattes avec le filet hélicoïdal externe du col. Il ne s'agit pas de visser l'organe de fixation sur le col, mais simplement d'assurer la qualité de l'imbrication, dans la plupart des cas, le couple final de vissage n'engendrera aucun mouvement de vissage.

Afin de mettre en oeuvre le procédé de montage défini ci-dessus, on peut utiliser une installation ou station de montage comprenant :
- des moyens de dépose pour déposer l'organe de fixation F sur le col R1,
- des moyens d'orientation angulaire pour orienter angulairement l'organe de fixation F sur le col R1, afin d'assurer la prise filetée intime correspondante en position finale de montage, et
- des moyens de poussée axiale pour engager la frette H autour de la jupe F1, afin d'amener les segments F21 du filet hélicoïdal interne F2 des pattes F11 en prise filetée intime correspondante avec le filet hélicoïdal externe R2 du col R1. Les moyens de poussée axiale peuvent agir uniquement et directement sur la frette, ou en variante, d'abord sur les pattes et ensuite sur la frette pour faire pivoter les pattes de leur position initiale, avantageusement à plat, jusque dans leur position finale de montage.

La station de montage peut identifier le départ filet du col. Cette opération peut être réalisée mécaniquement ou optiquement pour identifier la hauteur de filet par rapport à un point de référence, sur chaque flacon, avant la dépose pompe, pour définir l'orientation angulaire optimale de la pompe pour la dépose.

La dépose gravitaire de la pompe sur le col du flacon peut être effectuée sans exercer d'appui sur la pompe. La pompe reste en contact intime avec le col jusqu'au poste d'assemblage.

La station de montage peut identifier la position de l'organe de fixation. Cette opération peut être assurée soit mécaniquement ou optiquement par le dessus une fois la pompe posée sur le col, pour identifier la patte de l'insert la plus courte, ou plus généralement tout élément géométrique et/ou de couleur de l'insert pouvant servir de détrompeur ou d'indexation

La station de montage peut orienter angulairement de la pompe : Une fois la pompe posée sur le col, on effectue un mouvement angulaire avec une visseuse faible inertie pour placer la pompe dans la position la plus adaptée par rapport à l'entrée de filet du flacon.

La station de montage peut alors procéder au rabattement et au verrouillage des pattes : l'outil d'enfoncement de la frette H est assez proche de celui d'une pompe à claquer. L'outillage d'enfoncement exerce une poussée axiale vers le bas en s'appuyant sur les pattes et puis sur le haut de la frette. Cette force génère un mouvement en deux temps avec une pré-fermeture au niveau des charnières souples F13 des pattes qui basculent de la position 0° à 90° sur le filet R2 du col, puis par l'enfoncement complet de la frette H qui verrouille les pattes F11 de la jupe F1.

La station de montage peut optionnellement ajuster le couple de vissage-serrage : il est possible d'envisager en fin de montage une légère mise au couple de l'organe de fixation (via la frette H) avec une visseuse faible inertie, pour garantir une compression optimum du joint de col J, et un couple de dévissage acceptable pour l'utilisateur.

Grâce à l'invention, on garantit à la fois un montage rapide sur ligne, et un dévissage/revissage qualitatif pour rendre le produit rechargeable par l'utilisateur, tout en restant étanche. Pour ce faire, les pattes de l'insert sont de préférence injectées à plat pour faciliter le démoulage et la précision des formes des segments de filet. Ce point est avantageux pour assurer une bonne adéquation et imbrication des filets de l'insert sur ceux du col, en limitant considérablement le fluage et la déformation des filets de l'insert lors des opérations de montage, dévissage et revissage. Le procédé industriel assure par repérage mécanique et/ou optique une parfaite indexation angulaire entre le filet de la jupe et celui du col. Cette précision d'indexation garantit une bonne tenue de la pompe sur le flacon, un bon dévissage et revissage de la pompe, et une maitrise de la compression du joint de col pour assurer l'étanchéité de la pompe sur le flacon.

## Revendications

1. Distributeur de produit fluide comprenant :
- un réservoir de produit fluide (R) pourvu d'un col fileté (R1) formant au moins un filet hélicoïdal externe (R2) et un bord supérieur annulaire (R3),
- un élément de fermeture (T) monté sur le col fileté (R1) du réservoir (R) et comprenant un organe de fixation (F ; F') comprenant une jupe filetée (F1) formant au moins un filet hélicoïdal interne (F2), l'élément de fermeture (T) comprenant également une frette (H) qui vient en prise serrante autour de la jupe filetée (F1), la jupe (F1) comprenant plusieurs pattes (F11 , F11') formant chacune un segment (F21) du filet hélicoïdal interne (F2),
**caractérisé en ce que** :
- l'organe de fixation (F ; F') comprend des moyens d'indexation angulaire (F11' ; F33) permettant de le positionner par rapport au filet hélicoïdal externe (R2) du col (R1) avec une orientation angulaire déterminée, et
- les segments (F21) du filet hélicoïdal interne (F2) de la jupe filetée (F1) viennent en prise filetée correspondante avec le filet hélicoïdal externe (R2) du col (R1) en position finale de montage.

2. Distributeur selon la revendication 1, dans lequel les moyens d'indexation angulaire se présentant sous la forme d'une patte (F11') différente des autres.

3. Distributeur selon la revendication 1 ou 2, dans lequel l'organe de fixation (F) comprend une couronne supérieure continue (F3) à partir de laquelle s'étendent les pattes (F11, F11').

4. Distributeur selon la revendication 3, dans lequel les pattes (F11, F11') sont reliées à la couronne supérieure continue (F3) par des charnières (F13), permettant un pivotement radial des pattes (F11, F11') autour d'axes tangentiels respectifs.

5. Distributeur selon la revendication 4, dans lequel les charnières (F13) définissent deux positions extrêmes stables et une position intermédiaire instable, les deux positions extrêmes stables comprenant une position initiale de sortie de moule, dans laquelle les pattes (F11, F11') s'étendent radialement vers l'extérieur sensiblement à angle droit par rapport à la couronne supérieure continue (F3) et une position finale de montage dans laquelle les pattes (F11, F11') s'étendent axialement vers le bas sensiblement dans le prolongement de la couronne supérieure continue (F3).

6. Distributeur selon la revendication 4 ou 5, dans lequel les charnières (F13) présentent une largeur qui est inférieure à celle des pattes (F11, F11').

7. Distributeur selon la revendication 4, 5 ou 6, dans lequel les pattes (F11, F11') sont reliées ensemble par des voiles souples (F14), qui sont avantageusement séparés de la couronne supérieure continue (F3).

8. Distributeur selon l'une quelconque des revendications précédentes, dans lequel l'élément de fermeture (T) comprend un organe de distribution (P), tel qu'une pompe ou une valve et un poussoir (B) pour actionner l'organe de distribution (P) ou un dispositif de prélèvement, tel qu'un applicateur.

9. Distributeur selon l'une quelconque des revendications précédentes, dans lequel le col (R1) est réalisé en matière plastique.

10. Procédé de montage d'un distributeur selon l'une quelconque des revendications précédentes, comprenant les étapes successives suivantes :
a) Déposer l'organe de fixation (F ; F') sur le col (R1),
b) Orienter angulairement l'organe de fixation (F ; F') sur le col (R1), afin d'assurer la prise filetée intime correspondante en position finale de montage, et
c) Engager la frette (H) autour de la jupe (F1) pour amener les segments (F21) du filet hélicoïdal interne (F2) des pattes (F11, F11') en prise filetée intime correspondante avec le filet hélicoïdal externe (R2) du col (R1).

11. Procédé de montage selon la revendication 10, dans lequel un joint de col (J) est disposé sur le bord supérieur annulaire (R3) du col (R1), l'étape préalable d'orientation angulaire tenant compte de l'écrasement optimal du joint de col (J).

12. Procédé de montage selon la revendication 10 ou 11, dans lequel, avant ou pendant l'étape c), les pattes (F11, F11') sont rabattues autour du col (R1) à partir d'une position initiale dans laquelle elles s'étendent à plat radialement vers l'extérieur.

13. Procédé de montage selon l'une quelconque des revendications 10 à 12, dans lequel, avant ou pendant l'étape c), les pattes (F11, F11') sont amenées autour du col (R1) dans une position intermédiaire, faisant un angle de l'ordre de 0,5° à 45° par rapport à la position finale de montage, les pattes (F11, F11') étant contraintes dans cette position intermédiaire par la frette (H) ou un élément de poussée axiale.

14. Procédé de montage selon l'une quelconque des revendications 10 à 13, dans lequel, après l'étape c), un couple final de vissage est exercé sur l'organe de fixation (F ; F') pour garantir une imbrication optimale des segments (F21) du filet hélicoïdal interne (F2) des pattes (F11, F11') avec le filet hélicoïdal externe (R2) du col (R1) et une compression optimum d'un joint de col (J) sur le bord supérieur annulaire (R3) pour assurer l'étanchéité du système de distribution.

15. Station de montage pour mettre en oeuvre le procédé de montage des revendications 10 à 14, comprenant :
- des moyens de dépose pour déposer l'organe de fixation (F ; F') sur le col (R1),
- des moyens d'orientation angulaire pour orienter angulairement l'organe de fixation (F ; F') sur le col (R1), afin d'assurer la prise filetée intime correspondante en position finale de montage, et
- des moyens de poussée axiale agissant directement sur la frette (H), et optionnellement d'abord sur les pattes (F11 ; F11') de la jupe (F1), pour engager la frette (H) autour de la jupe (F1), afin d'amener les segments (F21) du filet hélicoïdal interne (F2) des pattes (F11, F11') en prise filetée intime correspondante avec le filet hélicoïdal externe (R2) du col (R1).

## Patentansprüche

1. Flüssigproduktspender, umfassend:
- einen Flüssigprodukt-Vorratsbehälter (R), der mit einem Gewindehals (R1) versehen ist, welcher mindestens einen äußeren schraubenförmigen Gewindegang (R2) und einen ringförmigen oberen Rand (R3) ausbildet,
- ein Verschlusselement (T), das auf dem Gewindehals (R1) des Vorratsbehälters (R) angebracht ist und ein Befestigungselement (F; F') mit einem Gewindemantel (F1), der mindestens einen inneren schraubenförmigen Gewindegang (F2) ausbildet, wobei das Verschlusselement (T) auch einen Schrumpfring umfasst, der um den Gewindemantel (F1) herum in engen Eingriff kommt, wobei der Gewindemantel (F1) mehrere Laschen (F11, F11') umfasst, von denen jede ein Segment (F21) des inneren schraubenförmigen Gewindegangs (F2) bildet,
**dadurch gekennzeichnet, dass**
- das Befestigungselement (F; F') Mittel zur Winkelindexierung (F11'; F33) umfasst, mit denen es unter einer bestimmten Winkelausrichtung in Bezug auf den äußeren schraubenförmigen Gewindegang (R2) des Gewindehalses (R1) positioniert werden kann, und
- die Segmente (F21) des inneren schraubenförmigen Gewindegangs (F2) des Gewindemantels (F1) in der endgültigen Montageposition in entsprechenden Gewindeeingriff mit dem äußeren schraubenförmigen Gewindegang (R2) des Gewindehalses (R1) kommen.

2. Spender nach Anspruch 1, bei dem die Mittel zur Winkelindexierung in Form einer Lasche (F11') vorliegen, die sich von den anderen Laschen unterscheidet.

3. Spender nach Anspruch 1 oder 2, bei dem das Befestigungselement (F) einen durchgehenden oberen Kranz (F3) umfasst, von dem die Laschen (F11, F11') weg verlaufen.

4. Spender nach Anspruch 3, bei dem die Laschen (F11, F11') über Scharniere (F13) mit dem durchgehenden oberen Kranz (F3) verbunden sind, die ein radiales Schwenken der Laschen (F11, F11') um jeweilige Tangentialachsen ermöglichen.

5. Spender nach Anspruch 4, bei dem die Scharniere (F13) zwei stabile Endstellungen und eine instabile Zwischenstellung definieren, wobei die beiden stabilen Endstellungen eine Ausgangsstellung bei Entnahme aus der Form, in der die Laschen (F11, F11') im Wesentlichen rechtwinklig zum durchgehenden oberen Kranz (F3) radial nach außen verlaufen, und eine Endmontagestellung, in der die Laschen (F11, F11') axial nach unten im Wesentlichen in Verlängerung des durchgehenden oberen Kranzes (F3) verlaufen, umfassen.

6. Spender nach Anspruch 4 oder 5, bei dem die Scharniere (F13) eine Breite aufweisen, die geringer ist als die der Laschen (F11, F11').

7. Spender nach Anspruch 4, 5 oder 6, bei dem die Laschen (F11, F11') durch flexible Stege (F14) miteinander verbunden sind, die vorteilhafterweise von dem durchgehenden oberen Kranz (F3) getrennt sind.

8. Spender nach einem der vorhergehenden Ansprüche, bei dem das Verschlusselement (T) ein Abgabeelement (P), beispielsweise eine Pumpe oder ein Ventil, und einen Drücker (B) zum Betätigen des Abgabeelements (P) oder einer Entnahmevorrichtung, beispielsweise einen Applikator, umfasst.

9. Spender nach einem der vorhergehenden Ansprüche, bei dem der Hals (R1) aus Kunststoffmaterial hergestellt ist.

10. Verfahren zur Montage eines Spenders nach einem der vorhergehenden Ansprüche, umfassend die folgenden aufeinanderfolgenden Schritte:
a) Aufsetzen des Befestigungselements (F; F') auf den Hals (R1),
b) winkliges Ausrichten des Befestigungselements (F; F') auf dem Hals (R1) zur Gewährleistung des entsprechenden festen Gewindeeingriffs in der Endmontagestellung, und
c) Anbringen des Schrumpfrings (H) um den Gewindemantel (F1) herum, um die Segmente (F21) des inneren schraubenförmigen Gewindegangs (F2) der Laschen (F11, F11') in entsprechenden engen Gewindeeingriff mit dem äußeren schraubenförmigen Gewindegang (R2) des Halses (R1) zu bringen.

11. Montageverfahren nach Anspruch 10, bei dem eine Halsdichtung (J) an dem ringförmigen oberen Rand (R3) des Halses (R1) angeordnet wird, wobei beim vorherigen Schritt der Winkelausrichtung die optimale Quetschung der Halsdichtung (J) berücksichtigt wird.

12. Montageverfahren nach Anspruch 10 oder 11, bei dem vor oder im Verlauf von Schritt c) die Laschen (F11, F11') aus einer flach radial nach außen verlaufenden Ausgangsstellung heraus um den Hals (R1) herumgeklappt werden.

13. Montageverfahren nach einem der Ansprüche 10 bis 12, bei dem vor oder im Verlauf von Schritt c) die Laschen (F11, F11') um den Hals (R1) herum in eine Zwischenstellung gebracht werden, die einen Winkel in der Größenordnung von 0,5° bis 45° zur Endmontagestellung bildet,
wobei die Laschen (F11, F11') durch den Schrumpfring (H) oder ein axiales Schubelement in diese Zwischenstellung gedrängt werden.

14. Montageverfahren nach einem der Ansprüche 10 bis 13, bei dem nach Schritt c) ein endgültiges Schraubdrehmoment auf das Befestigungsorgan (F; F') ausgeübt wird, um ein optimales Ineinandergreifen der Segmente (F21) des inneren schraubenförmigen Gewindegangs (F2) der Laschen (F11, F11') mit dem äußeren schraubenförmigen Gewindegang (R2) des Halses (R1) und eine optimale Kompression einer Halsdichtung (J) auf dem ringförmigen oberen Rand (R3) zu gewährleisten, um die Dichtigkeit des Spendersystems sicherzustellen.

15. Montagestation zur Durchführung des Montageverfahrens nach den Ansprüchen 10 bis 14, umfassend:
- Aufsetzmittel zum Aufsetzen des Befestigungselements (F; F') auf den Hals (R1),
- Winkelausrichtungsmittel zum winkligen Ausrichten des Befestigungselements (F; F') auf dem Hals (R1), um den entsprechenden festen Gewindeeingriff in der Endmontagestellung zu gewährleisten, und
- axiale Schubmittel, die direkt auf den Schrumpfring (H) und optional zuerst auf die Laschen (F11; F11') des Gewindemantels (F1) wirken, um den Schrumpfring (H) um den Gewindemantel (F1) herum in Eingriff zu bringen, um die Segmente (F21) des inneren schraubenförmigen Gewindegangs (F2) der Laschen (F11, F11') in entsprechenden engen Gewindeeingriff mit dem äußeren schraubenförmigen Gewindegang (R2) des Halses (R1) zu bringen.

## Claims

1. Fluid product dispenser comprising:
- a fluid product reservoir (R) provided with a threaded neck (R1) forming at least one external helical thread (R2) and an annular upper edge (R3),
- a closure element (T) mounted on the threaded neck (R1) of the reservoir (R) and comprising a fastening member (F; F') comprising a threaded skirt (F1) forming at least one internal helical thread (F2), the closure element (T) also comprising a band (H) which engages with a clamping action around the threaded skirt (F1), the skirt (F1) comprising several tabs (F11, F11') each forming a segment (F21) of the internal helical thread (F2),
**characterised in that**:
- the fastening member (F, F') comprises angular indexing means (F11', F33) for positioning it with respect to the external helical thread (R2) of the neck (R1) with a determined angular orientation, and
- the internal helical thread (F2) segments (F21) of the threaded skirt (F1) comes into corresponding threaded engagement with the external helical thread (R2) of the neck (R1) in the final assembly position.

2. Dispenser according to claim 1, wherein the angular indexing means are presented in the form of a tab (F11') different from the others.

3. Dispenser according to claim 1 or 2, wherein the fastening member (F) comprises a continuous upper crown (F3) from which the tabs (F11, F11') extend.

4. Dispenser according to claim 3, wherein the tabs (F11, F11') are connected to the continuous upper crown (F3) by hinges (F13), allowing a radial pivoting of the tabs (F11, F11') around respective tangential axes.

5. Dispenser according to claim 4, wherein the hinges (F13) define two stable extreme positions and an unstable intermediate position, the two stable extreme positions comprising a mould exit initial position, wherein the tabs (F11, F11') extend radially outwards substantially at a right angle with respect to the continuous upper crown (F3) and a final assembly position wherein the tabs (F11, F11') extend axially downwards substantially in the extension of the continuous upper crown (F3).

6. Dispenser according to claim 4 or 5, wherein the hinges (F13) have a width which is less than that of the tabs (F11, F11').

7. Dispenser according to claim 4, 5 or 6, wherein the tabs (F11, F11') are connected together by flexible walls (F14), which are advantageously separated from the continuous upper crown (F3).

8. Dispenser according to any one of the preceding claims, wherein the closure element (T) comprises a dispensing member (P), such as a pump or a valve and a pushbutton (B) to actuate the dispensing member (P) or a collection device, such as an applicator.

9. Dispenser according to any one of the preceding claims, wherein the neck (R1) is made of plastic material.

10. Method for mounting a dispenser according to any one of the preceding claims, comprising the following successive steps:
a) depositing the fastening member (F; F') on the neck (R1),
b) angularly orienting the fastening member (F; F') on the neck (R1), in order to ensure the corresponding close threaded engagement in the final assembly position, and
c) engaging the band (H) around the skirt (F1) to bring the segments (F21) of the internal helical thread (F2) of the tabs (F11, F11') into corresponding close threaded engagement with the external helical thread (R2) of the neck (R1).

11. Mounting method according to claim 10, wherein a neck seal (J) is disposed on the annular upper edge (R3) of the neck (R1), the preceding angular orientation step considering the optimal flattening of the neck seal (J).

12. Mounting method according to claim 10 or 11, wherein, before or during step c), the tabs (F11, F11') are folded around the neck (R1) from an initial position wherein they extend flat radially outwards.

13. Mounting method according to any one of claims 10 to 12, wherein, before or during step c), the tabs (F11, F11') are brought around the neck (R1) into an intermediate position, forming an angle of around 0.5° to 45° with respect to the final assembly position, the tabs (F11, F11') being stressed in this intermediate position by the band (H) or an axial thrust element.

14. Mounting method according to any one of claims 10 to 13, wherein, after step c), a final screwing torque is exerted on the fastening member (F; F') to guarantee an optimal interlocking of the segments (F21) of the internal helical thread (F2) of the tabs (F11, F11') with the external helical thread (R2) of the neck (R1) and an optimum compression of a neck seal (J) on the annular upper edge (R3) to ensure the sealing of the dispensing system.

15. Mounting station for implementing the mounting method of claims 10 to 14, comprising:
- depositing means for depositing the fastening member (F; F') on the neck (R1),
- angular orientation means for angularly orienting the fastening member (F; F') on the neck (R1), in order to ensure the corresponding close threaded engagement in the final assembly position, and
- axial thrust means acting directly on the band (H), and optionally first on the tabs (F11; F11') of the skirt (F1), for engaging the band (H) around the skirt (F1), in order to bring the segments (F21) of the internal helical thread (F2) of the tabs (F11, F11') into corresponding close threaded engagement with the external helical thread (R2) of the neck (R1).
